# FASCICULE DE BREVET EUROPEEN

(11) **EP 2 883 041 B1**
(45) Date de publication et mention de la délivrance du brevet: **25.11.2020**
(21) Numéro de dépôt: 13756636.0
(22) Date de dépôt: 31.07.2013
(51) Int. Cl.: G01N 23/04, G01N 23/046

(54) **PROCÉDÉ DE CARACTÉRISATION D'UN OBJET EN MATÉRIAU COMPOSITE**
VERFAHREN ZUR CHARAKTERISIERUNG EINES GEGENSTANDES AUS EINEM VERBUNDWERKSTOFF
METHOD FOR CHARACTERIZING A COMPOSITE MATERIAL OBJECT

(30) Priorité: 07.08.2012 FR 1257670
(43) Date de publication de la demande: 17.06.2015
(73) Titulaire: Safran Aircraft Engines, 75015 Paris (FR)
(72) Inventeur: SCHNEIDER, Julien, F-77550 Moissy-Cramayel Cedex (FR)
(74) Mandataire: Cabinet Beau de Loménie
(86) Numéro de dépôt international: PCT/FR2013/051851
(87) Numéro de publication internationale: WO 2014/023893

(56) Documents cités:
- US-A1- 2011 274 369
- BABUSKA I ET AL: "Damage analysis of fiber composites. I. Statistical analysis on fiber scale", COMPUTER METHODS IN APPLIED MECHANICS AND ENGINEERING ELSEVIER NETHERLANDS, vol. 172, no. 1-4, 16 avril 1999 (1999-04-16), pages 27-77, XP002695948, ISSN: 0045-7825
- TSAROUCHAS D ET AL: "Extraction of fibre network architecture by X-ray tomography and prediction of elastic properties using an affine analytical model", ACTA MATERIALIA, ELSEVIER, OXFORD, GB, vol. 59, no. 18, 25 juillet 2011 (2011-07-25), pages 6989-7002, XP028295643, ISSN: 1359-6454, DOI: 10.1016/J.ACTAMAT.2011.07.051 [extrait le 2011-07-29]
- MOLDOVAN G ET AL: "Noise deconvolution for area fraction measurements", MATERIALS SCIENCE AND TECHNOLOGY, MANEY PUBLISHING, GB, vol. 20, no. 1, 1 janvier 2004 (2004-01-01), pages 16-20, XP009168685, ISSN: 0267-0836
- COINDREAU O ET AL: "Direct 3D microscale imaging of carbon-carbon composites with computed holotomography", NUCLEAR INSTRUMENTS & METHODS IN PHYSICS RESEARCH. SECTION B: BEAM INTERACTIONS WITH MATERIALS AND A, ELSEVIER BV, NL, vol. 200, 1 January 2003 (2003-01-01), pages 308-314, XP004404644, ISSN: 0168-583X, DOI: 10.1016/S0168-583X(02)01693-2
- LE ET AL: "X-ray phase contrast microtomography for the analysis of the fibrous microstructure of SMC composites", COMPOSITES PART A: APPLIED SCIENCE AND MANUFACTURING, ELSEVIER, AMSTERDAM, NL, vol. 39, no. 1, 14 December 2007 (2007-12-14), pages 91-103, XP022391276, ISSN: 1359-835X, DOI: 10.1016/J.COMPOSITESA.2007.08.027
- GUILD F J ET AL: "Microstructural image analysis applied to fibre composite materials: a review", COMPOSITES, IPC BUSINESS PRESS LTD. HAYWARDS HEATH, GB, vol. 24, no. 5, 1 July 1993 (1993-07-01), pages 383-393, XP024357285, ISSN: 0010-4361, DOI: 10.1016/0010-4361(93)90246-5 [retrieved on 1993-07-01]
- REBELO KORNMEIER ET AL: "Non-destructive testing of satellite nozzles made of carbon fibre ceramic matrix composite, C/SiC", MATERIALS CHARACTERIZATION, ELSEVIER, NEW YORK, NY, US, vol. 58, no. 10, 29 August 2007 (2007-08-29), pages 922-927, XP022217037, ISSN: 1044-5803, DOI: 10.1016/J.MATCHAR.2006.09.010

## Description

### Domaine technique et art antérieur

L'invention s'inscrit dans le domaine des procédés de caractérisation de matériaux et de structures, pour les industries mécaniques en général et l'industrie aéronautique en particulier.

L'invention s'applique à des matériaux composites à renfort fibreux tissé, tressé ou encore cousu, qui trouvent de nombreuses applications dans le domaine de la construction de pièces pour avions, notamment, mais pas seulement, des pièces pour moteurs d'avions, par exemple les aubes de soufflante. Ces matériaux présentent des propriétés intéressantes en termes de poids, de résistance mécanique et de facilité de fabrication des pièces.

Pour une pièce donnée, la connaissance des caractéristiques du renfort fibreux dans la pièce est utile pour renforcer la connaissance des propriétés mécaniques de celle-ci. Le renfort fibreux est généralement décrit à l'aide des paramètres de tissage, tels que le taux de fibre (V_{f}), les distances entre colonnes de tissage (d_{c} et dₜ pour les fils de trame et de chaîne, respectivement), le rapport entre quantité de fils de trame et quantité de fils de chaîne (RCT), et les embuvages (θ).

Ces caractéristiques peuvent varier au sein même d'une pièce donnée, en fonction de la géométrie de celle-ci. Il est donc utile de pouvoir déterminer l'évolution de ces caractéristiques sur l'ensemble du volume de la pièce.

On connait quelques techniques de caractérisation, qui sont discutées ici en ce qui concerne les matériaux composites à matrice organique. Ces techniques de caractérisation utilisent soit des dissolutions chimiques et des relevés de masse, soit des découpes et des mesures sur des plans.

Parmi les techniques de caractérisations connues, on peut citer celles des documents Babuska et al. (Computer methods in applied mechanics and engineering, 172, 1999, pp. 27-77), Tsarouchas et al. (Acta Mater., 59, 2011, pp. 6989-7002), Moldovan et al. (Material science and technology, 20, 2004, pp. 16-20), US2011/274369, Coindreau et al. (Phys. Rev. B, 200, 2003, pp. 308-314), Le et al. (Composites: part A, 39, 2008, pp. 91-103), Guild et al. (Composites, number 5 1993, pp. 383-393) et Rebel Kornmeier et al. (Materials Chatracterization, 58, 2007, pp. 922-927)

Certaines informations sont ainsi accessibles, comme le taux de fibres, déterminé par pesée après dissolution de la matrice par attaque chimique à l'acide, et les distances inter colonnes, mesurées par observation d'une coupe.

Mais d'autres paramètres restent très difficiles à extraire : ainsi, il est difficile de s'assurer qu'un plan de coupe suive l'ensemble des torons d'une même colonne de tissage, et la mesure des embuvages et ondulations est donc particulièrement délicate, notamment sur un volume représentatif d'une cellule de tissage comportant une quantité importante de torons (qui peut être supérieur à 100 dans certaines armures). De même, le rapport entre quantité de fils de trame et quantité de fils de chaîne n'est accessible qu'indirectement.

En plus de n'offrir qu'une caractérisation incomplète, ces techniques ont les inconvénients majeurs d'être des techniques destructives, de n'être applicables qu'à seulement un petit volume de matériau (4 g en général) et d'avoir une mise en œuvre coûteuse en temps. Les dissolutions posent de plus des problèmes de risque d'erreurs dans les mesures dues à d'éventuelles impuretés (risque d'autant plus grand que le volume étudié est grand) et sont génératrices de déchets difficiles à recycler.

L'invention vise à résoudre les difficultés ainsi évoquées.

### Définition de l'invention - avantages apportés par celle-ci

L'invention consiste en un procédé de caractérisation d'un objet en matériau composite à renfort fibreux tissé, tressé ou cousu, comprenant une étape de détermination, par tomographie aux rayons X, de niveaux de gris d'au moins une partie de l'objet, puis une étape d'exploitation desdits niveaux de gris pour obtenir au moins une information sur le tissage, par distinction d'au moins la matrice libre et de torons de fibres mêlées de matrice, lesdits torons étant considérés comme un matériau homogène. Selon l'invention, l'étape de détermination est effectuée avec l'objet en rotation autour d'un axe parallèle à une direction de fibres de l'objet, et l'étape d'exploitation est effectuée par distinction de la matrice libre, des torons de trame et des torons de chaîne.

Grâce à ces caractéristiques, on procède à une caractérisation non destructive de l'objet, et on accède à des informations jusqu'ici très difficiles à obtenir, rapidement et avec une grande précision. Il s'agit d'une avancée considérable, puisque l'on travaille à une échelle intermédiaire, en considérant les torons de fibres mêlées de matrice comme un matériau homogène dont on peut distinguer les niveaux de gris de ceux de la matrice.

Cette méthodologie permet de plus de travailler sur des échantillons de taille importante.

Il s'agit là d'un procédé basé sur un phénomène nouvellement caractérisé, très innovant, qui permet une détermination fine de paramètres jusque-là difficilement accessibles ou non accessibles. Seuls des études de paramétrages optimisés ont permis de détecter l'existence du phénomène, selon lequel les torons de chaine et les torons de trame, considérés chacun comme un matériau homogène, ont des répartitions de niveaux de gris différentes.

Selon un mode de réalisation, l'étape d'exploitation comprend la détermination d'une répartition de niveaux de gris, puis une déconvolution dans la dite répartition d'au moins deux gaussiennes pour déterminer au moins un taux volumique de torons. Cela permet d'obtenir des informations sur une coupe ou un volume de l'objet. L'étape d'exploitation peut être également effectuée à l'aide d'une relation prédéterminée entre taux de fibres dans le matériau et taux volumique de torons. L'étape d'exploitation peut notamment comprendre une déconvolution d'au moins trois gaussiennes pour déterminer les taux volumiques des torons de trame et les torons de chaîne et un rapport entre quantités de fibre en fils de trame et de fibre en fils de chaîne, ce qui est très avantageux, car ces informations sont très difficiles à obtenir autrement.

Dans une version particulière de l'invention, l'étape d'exploitation comprend la détermination de répartitions de niveaux de gris pour une succession de coupes de l'objet, et l'obtention d'une distance inter-colonnes de tissage par application d'une transformée de Fourier ou par mesure de distance pic à pic sur la succession de coupes.

Dans un autre mode de réalisation, l'étape d'exploitation comprend la visualisation de torons dans une image de l'objet en fonction des niveaux de gris. Préférentiellement, on distingue dans l'image les torons de chaine et les torons de trame en fonction des niveaux de gris, et si besoin est, on détermine un angle d'embuvage ou un paramètre d'ondulations d'un toron, ce qui est très avantageux, car ces informations sont très difficiles à obtenir autrement.

L'invention est particulièrement appliquée à un matériau composite à renfort fibreux tissé constitué de fibres de carbone, ou d'un autre matériau à comportement similaire. Le matériau peut être à matrice organique, métallique ou céramique. L'objet étudié peut être une pièce de turboréacteur, et avantageusement, une structure complète. Il peut aussi être un prélèvement.

### Brève description des figures

Les figures 1 et 2 présentent un mode de réalisation, qui ne fait pas partie de l'invention.
Les figures 3 et 4 présentent un premier mode de réalisation d'un procédé selon l'invention.
La figure 5 présente des résultats obtenus dans le cadre d'une variante du mode de réalisation des figures 3 et 4.
La figure 6 présente un second mode de réalisation de l'invention.

### Description de modes de réalisation

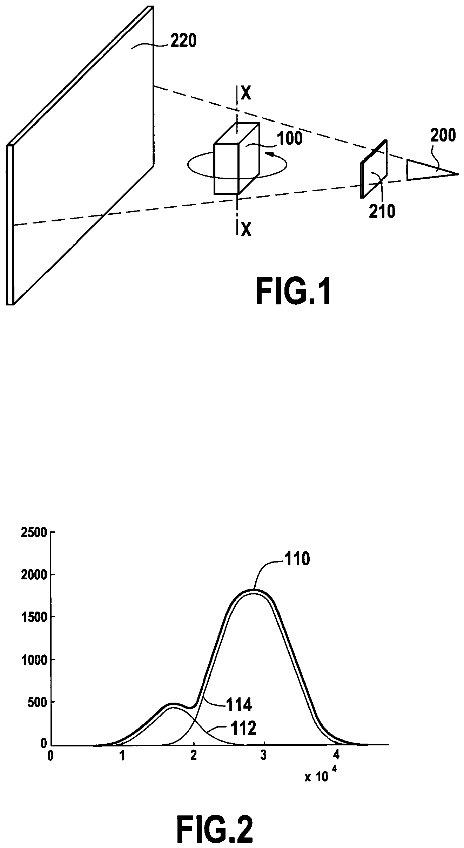

En **figure 1****,** un mode de réalisation, qui ne fait pas partie de l'invention, est présenté. Plus précisément, un dispositif d'étude par tomographie aux rayons X est représenté. Précisément, le dispositif est un dispositif de micro-tomographie calculée par ordinateur (µ-CT). Il est appliqué pour la caractérisation d'un objet 100 en matériau composite à matrice organique epoxyde et fibres de carbone. Les fibres de carbone ont un diamètre de l'ordre de 5 µm et ne sont pas visualisés dans le procédé présenté.

Le dispositif d'étude comprend une source de rayons X 200, un filtre 210 pour filtrer le faisceau source à l'aide d'une épaisseur de 0.1 mm de cuivre par exemple, et un détecteur 2D 220. L'objet 100 est positionné entre le filtre 210 et le détecteur 220, dans le faisceau de rayons X. Il est en rotation autour d'un axe X par rapport au détecteur 220 et au filtre 210. L'appareil de tomographie enregistre les niveaux de gris des voxels de l'objet 100.

En **figure 2****,** on a représenté le graphe 110 de la répartition des niveaux de gris de l'ensemble du volume de l'objet 100. L'axe des abscisses indique le niveau de gris (de 1 à 2^16-1=65535) et l'échelle des ordonnées indique le nombre de voxels présentant un niveau de gris donné.

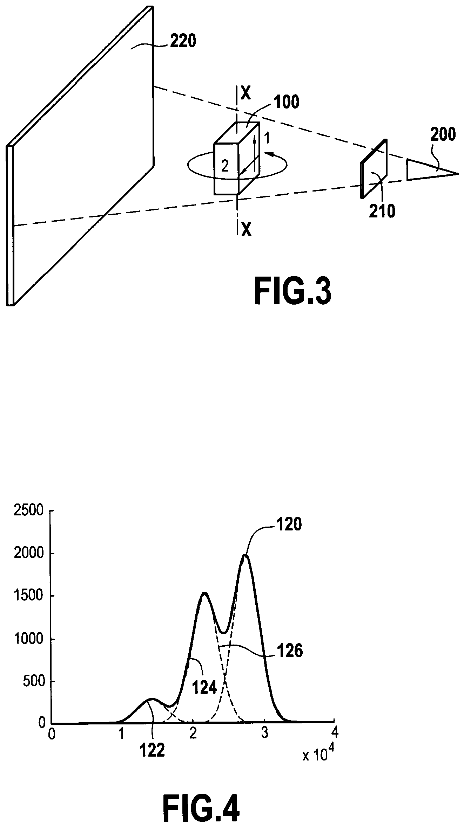

Le graphe 110 de répartition présente deux maxima visibles. Dans certaines circonstances le graphe en présente trois, comme cela sera présenté en référence aux figures 3 et 4.

On considère ensuite, pour l'analyse de ce graphe 110, que le matériau composite est constitué de matrice libre et de torons de fibres mêlées de matrice considérés comme constituant un matériau homogène.

On procède à la déconvolution du graphe en deux gaussiennes, en s'appuyant sur le fait que chacun de ces deux matériaux homogènes ont une répartition de niveaux de gris gaussienne. Ainsi, on fait apparaître dans le graphe 110 les contributions respectives de la matrice epoxyde et des torons. Ces deux contributions sont des gaussiennes référencées 112 et 114. Les torons ont ici une contribution plus forte, et des niveaux de gris plus élevés.

En additionnant les nombres de voxels de chacune des deux gaussiennes 112 et 114, on obtient le volume occupé par la matrice et le volume occupé par les torons et, en faisant le rapport, on obtient le taux volumique de torons, noté Vₜₒᵣₒₙ, dans le volume étudié de l'objet 100.

En **figure 3****,** un premier mode de réalisation selon l'invention est présenté. Il diffère du mode de réalisation des figures 1 et 2 par deux aspects.

D'une part, l'objet 100 a été placé avec l'une de ses directions de tissage parallèle à l'axe de rotation X. Cette direction de tissage est notée 1 sur la figure. La direction 2 est perpendiculaire à l'axe X.

D'autre part, la source de rayons X 200 a été optimisée, par application d'une forte intensité et d'une basse tension pour la génération des rayons X.

L'appareil de tomographie enregistre les niveaux de gris des voxels de l'objet 100, comme en figure 1.

En **figure 4****,** on a représenté le graphe 120 de la répartition des niveaux de gris de l'ensemble du volume de l'objet 100, dans le premier mode de réalisation. L'axe des abscisses indique à nouveau le niveau de gris et l'échelle des ordonnées indique le nombre de voxels présentant un niveau de gris donné.

Le graphe 110 de répartition présente trois maxima visibles.

Des causes possibles pour ce phénomène semblent être le caractère orthotrope de la fibre de carbone, et/ou le fait que les interstices entre les fibres à l'intérieur des torons possèdent une orientation prédéfinie. Ces deux phénomènes peuvent d'ailleurs peut-être être couplés.

Il apparait en tout cas que les torons ont une absorption différente dans leur direction transversale et dans leur direction longitudinale. Dans l'arrangement de la figure 3, les torons de la direction 1 sont toujours traversés transversalement, alors que les torons de la direction 2 sont parfois traversés longitudinalement au cours des rotations de l'objet 100 autour de l'axe X. Les niveaux de gris des torons de la direction 1 (parallèle à l'axe de rotation) sont plus faibles que ceux des torons de la direction 2.

On procède à la déconvolution du graphe en trois gaussiennes, en s'appuyant sur la fait que, la matrice d'une part, et les torons de la direction 1, et les torons de la direction 2 d'autre part, ont chacun des répartitions de niveaux de gris gaussienne.

Les torons de la direction 1 et les torons de la direction 2 sont les uns et les autres considérés comme des matériaux homogènes.

Ainsi, on fait apparaître dans le graphe 120 les contributions respectives de la matrice epoxyde et des torons de la direction 1 et des torons de la direction 2 (ou les torons de trame et les torons de chaine). Ces trois contributions sont des gaussiennes référencées 122, 124 et 126. Les torons de la direction 2 ont ici une contribution plus forte. Les deux types de torons ont des niveaux de gris plus élevés que la matrice.

En additionnant les nombres de voxels de chacune des trois gaussiennes 122, 124 et 126, on obtient le volume occupé par la matrice et le volume occupé par les torons de trame et les torons de chaîne, et, en faisant des rapports, on obtient le taux volumique de torons Vₜₒᵣₒₙ dans le volume étudié de l'objet 100, plus finement qu'avec le procédé des figures 1 et 2, et également le rapport entre torons de chaîne et torons de trame (RCT).

Une étude préalable d'échantillons homogènes témoins de matériau composite à matrice epoxyde et fibres de carbone à différents taux de fibres dans le matériau a été menée. Cette étude a comporté une étude par tomographie et déconvolution tel que présenté en figures 1 et 2 (ou figures 3 et 4) et une dissolution des échantillons pour déterminer leurs taux de fibres. Ainsi, pour ces échantillons témoins, on connait le taux de fibres global (dans le matériau) V_{f} et le taux de fibres dans les torons.

Il a été en particulier constaté par les inventeurs, que le taux de fibres dans les torons est proportionnel au taux de fibres dans le matériau V_{f} sur une gamme de taux de fibres dans le matériau V_{f} comprise entre 54 et 64%
Dans cette gamme où la relation est linéaire, ainsi qu'en dehors de cette gamme, l'étude préalable permet de déduire, pour un volume étudié d'un objet 100 donné, le taux de fibres global V_{f} à partir du taux de torons qui a été obtenu par l'étude de tomographie et la déconvolution.

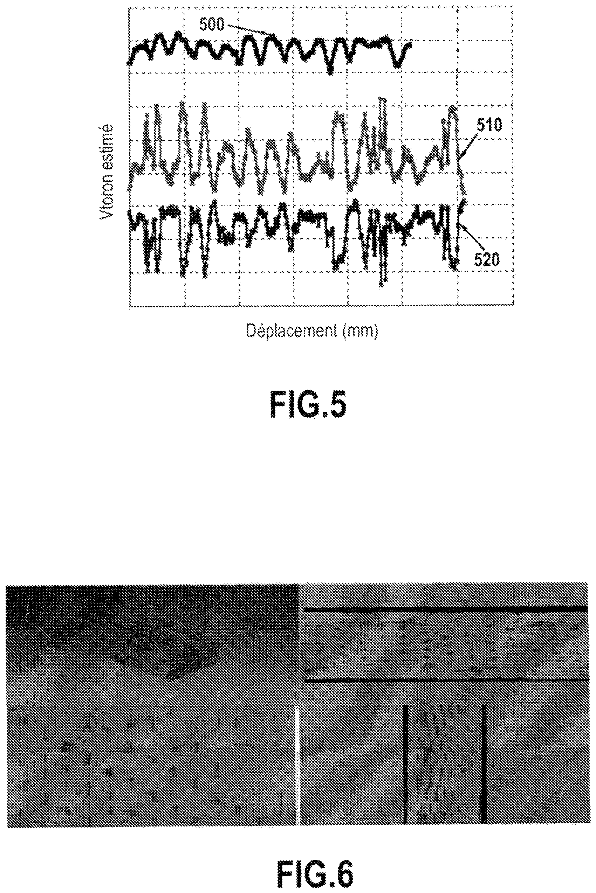

En **figure 5****,** un aspect d'une variante du mode de réalisation des figures 3 et 4 est présenté. Au lieu d'étudier la répartition des niveaux de gris de l'ensemble du volume de l'objet 100, on étudie une telle répartition pour chaque coupe (ou sous-volume de faible épaisseur) du volume de l'objet visualisable avec le système de tomographie. Les coupes sont repérées par la valeur du déplacement selon un axe, présenté sur la figure 5 en abscisses, et gradué en millimètres, pour un objet de 3 cm.

Pour chaque coupe on procède à la déconvolution du graphe en trois gaussiennes. Ainsi, on fait apparaître dans le graphe 110 les contributions respectives de la matrice epoxyde et des torons de trame et des torons de chaîne. On obtient le taux volumique de torons Vₜₒᵣₒₙ dans la coupe étudiée, qui est représenté sous la forme de la courbe 500, et également les taux volumiques de torons de chaîne et de torons de trame, qui sont représentés sous la forme des courbes 510 et 520.

Des courbes 500, 510 et 520, on peut extraire les distances inter colonnes en chaîne et en trame d_{c} et dₜ. Cela peut être fait, quand ces paramètres sont constants, par une transformée de Fourrier afin de faire ressortir la fréquence des ondulations des courbes 500, 510 et/ou 520. Si les distances inter colonnes ne sont pas constantes, une mesure des distances pics à pics sur les courbes 500, 510 et 520 permet d'obtenir l'information.

En **figure 6****,** un second mode de réalisation de l'invention est représenté. On effectue dans ce cas de l'imagerie 3D du volume de l'objet 300, en visualisant, par exemple avec une couleur choisie, les voxels dont les niveaux de gris sont dans une gamme délimitée par un ou deux seuils, en fonction des valeurs attendues pour la matrice, les torons, ou éventuellement, si l'arrangement de la figure 3 est utilisé, les torons de trame ou les torons de chaîne. Ainsi, il est possible de suivre précisément un toron donné dans l'image, et donc de déterminer ses paramètres d'embuvage (θ) et d'ondulation.

Dans une variante, qui ne fait pas partie de l'invention, on procède à des acquisitions avec l'objet 300 positionné de telle sorte que les torons de chaine et les torons de trame soient orientés à 45° par rapport à l'axe de rotation. Ainsi, les torons de chaine et de trame sont traversés en moyenne, sur une rotation complète, de la même manière. Seules deux gaussiennes apparaissent, comme en figure 2.

Dans une autre variante, qui ne fait pas partie de l'invention, l'axe de rotation est aligné avec la direction perpendiculaire au plan de tissage (perpendiculairement aux torons de chaine et aux torons de trame), et à nouveau, les torons de chaine et de trame sont traversés en moyenne, sur une rotation complète, de la même manière. Seules deux gaussiennes apparaissent, comme en figure 2.

L'invention est appliquée avantageusement à des structures complètes en matériau composite pour l'aéronautique, et en particulier à des pièces de moteurs d'avion, telles qu'une aube ou un carter, étudié en entier, sans découpe préalable d'un échantillon.

L'invention n'est pas limitée aux modes de réalisation décrits mais s'étend à toutes les variantes dans la limite de la portée des revendications.

## Revendications

1. Procédé de caractérisation d'un objet (100) en matériau composite à renfort fibreux tissé, comprenant une étape de détermination, par tomographie aux rayons X (Fig. 1 ; Fig. 3), de niveaux de gris (110 ; 120) d'au moins une partie de l'objet, puis une étape d'exploitation desdits niveaux de gris pour obtenir au moins une information sur le tissage (V_{f} ; RCT ; d_{c}, dₜ ; θ), par distinction d'au moins la matrice libre (112 ; 122) et de torons de fibres mêlées de matrice (114 ; 124, 126), lesdits torons étant considérés comme un matériau homogène, ladite étape de détermination est effectuée avec l'objet (100) en rotation autour d'un axe (X) parallèle à une direction de fibres (1) de l'objet, et ladite étape d'exploitation est effectuée par distinction de la matrice libre (122), des torons de trame (124) et des torons de chaîne (126).

2. Procédé de caractérisation selon la revendication 1 dans lequel l'étape d'exploitation comprend la détermination d'une répartition de niveaux de gris (110), puis une déconvolution dans la dite répartition d'au moins deux gaussiennes (112, 114 ; 122, 124, 126), pour déterminer un taux volumique de torons (Vₜₒᵣₒₙ).

3. Procédé de caractérisation selon la revendication 2, dans lequel l'étape d'exploitation est effectuée également à l'aide d'une relation prédéterminée entre taux de fibres dans le matériau (V_{f}) et taux volumique de torons (Vₜₒᵣₒₙ).

4. Procédé de caractérisation selon la revendication 2 ou la revendication 3, dans lequel l'étape d'exploitation comprend une déconvolution d'au moins trois gaussiennes (122, 124, 126) pour déterminer les taux volumiques des torons de trame et les torons de chaîne et un rapport (RCT) entre quantités de fibre en fils de trame et de fibre en fils de chaîne.

5. Procédé de caractérisation selon l'une des revendications 2 à 4, dans lequel l'étape d'exploitation comprend la détermination de répartitions de niveaux de gris pour une succession de coupes de l'objet (Fig. 5), et l'obtention d'une distance inter-colonnes de tissage (d_{c}, dₜ) par application d'une transformée de Fourier ou par mesure de distance pic à pic sur la succession de coupes.

6. Procédé de caractérisation selon l'une des revendications 1 à 5, dans lequel l'étape d'exploitation comprend la visualisation de torons (Fig. 6) dans une image de l'objet en fonction des niveaux de gris.

7. Procédé de caractérisation selon la revendication 6, dans lequel on distingue dans l'image les torons de chaine et les torons de trame en fonction des niveaux de gris.

8. Procédé de caractérisation selon la revendication 6 ou la revendication 7, dans lequel on détermine un angle d'embuvage (θ) ou un paramètre d'ondulations d'un toron.

9. Procédé de caractérisation selon l'une des revendications 1 à 8, le renfort fibreux étant tissé et étant constitué de fibres de carbone, ou d'un autre matériau.

10. Procédé de caractérisation selon l'une des revendications 1 à 9, le matériau étant à matrice organique, métallique ou encore céramique.

11. Procédé de caractérisation selon l'une des revendications 1 à 10, l'objet étant une pièce de turboréacteur.

12. Procédé de caractérisation selon l'une des revendications 1 à 11, l'objet étant une structure complète ou un prélèvement.

## Patentansprüche

1. Verfahren zur Charakterisierung eines Objekts (100) aus Verbundwerkstoff mit gewebter Faserverstärkung, umfassend einen Schritt des Bestimmens von Graustufen (110; 120) von wenigstens einem Teil des Objekts mittels Röntgentomographie (Fig. 1; Fig. 3), anschließend einen Schritt des Auswertens der Graustufen, um wenigstens eine Information über das Weben (V_{f}; RCT; d_{c}, dₜ; θ) durch Unterscheidung wenigstens der freien Matrix (112; 122) und von Strängen gemischter Matrixfasern (114; 124, 126) zu erhalten, wobei die Stränge als ein homogenes Material betrachtet werden, der Schritt des Bestimmens wird durchgeführt, während das Objekt (100) sich um eine Achse (X) parallel zu einer Faserrichtung (1) des Objekts dreht, und der Schritt des Auswertens wird durch Unterscheidung der freien Matrix (122), der Schussstränge (124) und der Kettstränge (126) durchgeführt.

2. Charakterisierungsverfahren nach Anspruch 1, bei dem der Schritt des Auswertens das Bestimmen einer Verteilung von Graustufen (110), anschließend eine Entfaltung in der Verteilung von wenigstens zwei Gauß-Funktionen (112, 114; 122, 124, 126) umfasst, um einen Volumenanteil von Strängen (Vₜₒᵣₒₙ) zu bestimmen.

3. Charakterisierungsverfahren nach Anspruch 2, bei dem der Schritt des Auswertens auch mit Hilfe einer vorbestimmten Beziehung zwischen Faseranteil in dem Material (V_{f}) und Volumenanteil von Strängen (Vₜₒᵣₒₙ) durchgeführt wird.

4. Charakterisierungsverfahren nach Anspruch 2 oder Anspruch 3, bei dem der Schritt des Auswertens eine Entfaltung von wenigstens drei Gauß-Funktionen (122, 124, 126) umfasst, um die Volumenanteile der Schussstränge und der Kettstränge sowie ein Verhältnis (RCT) zwischen Schussfaden- und Kettfaden-Fasermengen zu bestimmen.

5. Charakterisierungsverfahren nach einem der Ansprüche 2 bis 4, bei dem der Schritt des Auswertens das Bestimmen von Graustufen-Verteilungen für eine Folge von Schnitten des Objekts (Fig. 5) sowie das Erhalten eines Abstands zwischen Webspalten (d_{c}, dₜ) durch Anwenden einer Fourier-Transformation oder durch Messen des Abstandes von Spitze zu Spitze an der Folge von Schnitten umfasst.

6. Charakterisierungsverfahren nach einem der Ansprüche 1 bis 5, bei dem der Schritt des Auswertens das Sichtbarmachen von Strängen (Fig. 6) in einem Bild des Objekts in Abhängigkeit von den Graustufen umfasst.

7. Charakterisierungsverfahren nach Anspruch 6, bei dem in dem Bild die Kettstränge und die Schussstränge in Abhängigkeit von den Graustufen unterschieden werden.

8. Charakterisierungsverfahren nach Anspruch 6 oder Anspruch 7, bei dem ein Einarbeitungswinkel (θ) oder ein Ondulationsparameter eines Strangs bestimmt wird.

9. Charakterisierungsverfahren nach einem der Ansprüche 1 bis 8, wobei die Faserverstärkung gewebt ist und aus Kohlenstofffasern oder aus einem anderen Material besteht.

10. Charakterisierungsverfahren nach einem der Ansprüche 1 bis 9, wobei das Material eine organische, metallische oder aber keramische Matrix aufweist.

11. Charakterisierungsverfahren nach einem der Ansprüche 1 bis 10, wobei das Objekt ein Teil eines Turbostrahltriebwerks ist.

12. Charakterisierungsverfahren nach einem der Ansprüche 1 bis 11, wobei das Objekt eine vollständige Struktur oder eine Entnahme ist.

## Claims

1. A characterization method for characterizing an article (100) made of composite material having woven, braided, or sewn fiber reinforcement, the method comprising a determination step of using X-ray tomography (Figure 1; Figure 3) to determine gray levels (110; 120) of at least a portion of the article, followed by an exploitation step of exploiting said gray levels to obtain information concerning the weaving (V_{f}; warp/weft ratio; d_{c}, dₜ; θ) by distinguishing between at least the free matrix (112; 122) and the threads (114; 124, 126) of fibers mixed with the matrix, said threads being considered as being a material that is homogeneous, wherein the determination step is performed with the article (100) rotating about an axis (X) parallel to a fiber direction (1) of the article, and said exploitation step is performed by distinguishing weft threads (124) and warp threads (126) from the free matrix (122).

2. A characterization method according to claim 1, wherein the exploitation step comprises determining a distribution of gray levels (110), and then deconvoluting at least two Gaussian curves (112, 114; 122, 124, 126) in said distribution in order to determine a thread volume fraction (V_{thread}).

3. A characterization method according to claim 2, wherein the exploitation step is also performed with the help of a predetermined relationship between the fiber fraction (V_{f}) in the material and the thread volume fraction (V_{thread}).

4. A characterization method according to claim 2 or claim 3, wherein the exploitation step comprises deconvoluting at least three Gaussian curves (122, 124, 126) in order to determine the volume fractions of the weft threads and of the warp threads, and a weft/warp ratio between the quantities of weft yarn fibers and of warp yarn fibers.

5. A characterization method according to any one of claims 2 to 4, wherein the exploitation step comprises determining gray level distributions for a succession of sections of the article (Figure 5), and obtaining a distance between weaving columns (d_{c}, dₜ) by applying a Fourier transform or by measuring peak-to-peak distances in the succession of sections.

6. A characterization method according to any one of claims 1 to 5, wherein the exploitation step comprises displaying threads (Figure 6) in an image of the article as a function of gray levels.

7. A characterization method according to claim 6, wherein the warp yarns and the weft yarns are distinguished within the image as a function of gray levels.

8. A characterization method according to claim 6 or claim 7, wherein a contraction angle (θ) or a waviness parameter of a thread is determined.

9. A characterization method according to any one of claims 1 to 8, in which the fiber reinforcement is woven and constituted by fibers made of carbon or of some other material.

10. A characterization method according to any one of claims 1 to 9, wherein the material has a matrix that is organic, metallic, or indeed ceramic.

11. A characterization method according to any one of claims 1 to 10, wherein the article is a part for a turbojet.

12. A characterization method according to any one of claims 1 to 11, wherein the article is a complete structure or a sample.
